# EUROPÄISCHE PATENTSCHRIFT

(11) **EP 2 502 303 B1**
(45) Veröffentlichungstag und Bekanntmachung des Hinweises auf die Patenterteilung: **14.08.2024**
(21) Anmeldenummer: 10781493.1
(22) Anmeldetag: 18.11.2010
(51) Int. Cl.: H01M 10/052, H01M 4/58, H01M 4/48, C01G 23/00, C01D 15/00, C01D 15/02

(54) **Lithiumbatterie ENTHALTEND SAUERSTOFFHALTIGE KONVERSIONSELEKTRODEN**
Lithium battery CONTAINING OXYGEN-CONTAINING CONVERSION ELECTRODES
Batterie au lithium COMPRÉNANT DES ÉLECTRODES DE CONVERSION CONTENANT DE L'OXYGÈNE

(30) Priorität: 20.11.2009 DE 102009046916
(43) Veröffentlichungstag der Anmeldung: 26.09.2012
(73) Patentinhaber: Albemarle Germany GmbH, 60549 Frankfurt am Main (DE)
(72) Erfinder: WIETELMANN, Ulrich, 61381 Friedrichsdorf (DE)
(74) Vertreter: Uexküll & Stolberg
(86) Internationale Anmeldenummer: PCT/EP2010/067756
(87) Internationale Veröffentlichungsnummer: WO 2011/061256

(56) Entgegenhaltungen:
- DE-A1- 3 906 082
- US-A- 4 071 665
- US-A- 5 283 136
- US-A- 5 436 549
- US-A1- 2009 053 594
- HAERTLING C ET AL: "A literature review of reactions and kinetics of lithium hydride hydrolysis", JOURNAL OF NUCLEAR MATERIALS, ELSEVIER BV, NL, vol. 349, no. 1-2, 15 February 2006 (2006-02-15), pages 195 - 233, XP025187812, ISSN: 0022-3115, [retrieved on 20060215], DOI: 10.1016/J.JNUCMAT.2005.10.005

## Beschreibung

Die zur Zeit verwendeten wiederaufladbaren Lithiumbatterien enthalten Graphit als Anodenmaterial. Graphit fungiert als Lithiuminsertionsmaterial und es hat gemäß der Gleichung

Li + 6 C → LiC₆

eine theoretische Kapazität von 372 mAh/g bei einem Potential von ca. 0,2 V *vs* Li/Li⁺. Die wesentlich höhere Speicherkapazität von Lithiummetall (3860 mAh/g) kann in praxistauglichen Batterien nicht genutzt werden, da solche Batterien weder sicher noch zyklenstabil sind. Beim Zyklen scheidet sich das Lithiummetall teilweise nicht planar, sondern in Form von Auswachsungen (Dendriten) ab. Diese Auswachsungen können sich von der Metallanode lösen, wodurch die elektrochemische Zelle entsprechend an Kapazität verliert. Noch gravierender sind die Folgen, wenn nadelförmige Dendriten den Separator durchdringen. Dadurch kann die Batteriezelle kurzgeschlossen werden mit häufig katastrophalen Folgen: thermischer run-away, häufig begleitet von Feuererscheinungen.

Es gab deshalb Bemühungen, statt reinem Lithiummetall Lithiumlegierungen als Anodenmaterial zu verwenden. Aber Lithiumlegierungen zeigen extrem starke Volumenschwankungen bei der Lithium- Ein- und -Auslagerung (teilweise mehrere 100 %, z.B. Li₉Al₄: 238 %). Deshalb konnten sich Legierungsanoden mit der Ausnahme von Zinn-Graphit-Kompositen am Markt nicht durchsetzen. Zinn ist jedoch ein seltenes und teures Element, was den breiten Einsatz zinnhaltiger Materialen verhinderte.

Tarascon und Aymard schlugen eine elektrochemische Zelle vor, bei der Lithiumhydrid als negative Elektrode (Anode) Verwendung findet (EP2026390A2):

MH*ₓ* + Li ⇔ *x*LiH + M (1)

mit M = La, Mg, Ni, Na, Ti

Das in o. g. Patentschrift im Detail beschriebene Mg-basierte System weist jedoch eine ausgeprägte Hysterese auf und seine Funktionsfähigkeit in einer echten Lithiumbatterie konnte bisher nicht demonstriert werden.

Es ist ein Anodenmaterial gesucht, das die Nachteile des Stands der Technik vermeidet, d.h.
- eine hohe Kapazität (>> 372 mAh/g)
- und gleichzeitig eine gute Reversibilität aufweist,
- und dabei keine teuren oder giftigen Bestandteile
enthält.

Die vorliegende Erfindung betrifft eine Lithiumbatterie, die im beigefügten Anspruchssatz definiert ist.

Es wurde überraschend gefunden, dass Lithiumbatterien enthaltend übergangsmetallfreie Lithium-Sauerstoffverbindungen der Formeln
Li₂O und/oder Li₂O₂ und/oder LiOH
in der negativen Masse (Anode) eine gute Zyklenstabilität aufweisen. Die sauerstoffhaltigen Elektrodenmaterialien der erfindungsgemäßen Lithiumbatterie können im lithiumreichen, d.h. geladenen Zustand, neben mindestens einer der genannten Lithiumsauerstoffverbindungen weiterhin noch Lithiumhydrid enthalten oder daraus bestehen. Alle genannten weitgehend übergangsmetallfreien lithiumhaltigen Verbindungen sind in gebräuchlichen aprotischen Elektrolyten (d.h. stromleitenden Medien, die keine sauren Wasserstoffatome aufweisen) unlöslich und sie können deshalb in galvanischen Zellen mit solchen aprotischen Elektrolyten, beispielsweise Lithiumbatterien, verwendet werden. Aufgrund ihres niedrigen Potentials gegenüber Li/Li⁺ werden sie erfindungsgemäß als Anode (negative Elektrode) eingesetzt.

Geeignete aprotische Elektrolyte können fest, flüssig oder gelartig sein. Insbesondere sind Flüssigelektrolyte bestehend aus Lösungen eines oxidationsstabilen Lithiumsalzes (z.B. LiPF₆, LiBF₄, LiBF₂C₂O₄, LiB(C₂O₄)₂ (LiBOB), Lithiumtriflat oder Lithiumimide wie LiTFSI oder LFSI) in organischen Lösungsmitteln (z.B. Kohlensäureester, Carbonsäureester und/oder Nitrilen) oder ionischen Flüssigkeiten oder Mischungen daraus geeignet. Besonders bevorzugt sind Elektrolyte, die kein Leitsalz mit labilen (d.h. thermo- oder hydrolyseempfindlichen) Element-Fluorbindungen aufweisen. Beispielsweise ist es bekannt, dass LiPF₆ beim Erhitzen oder im Kontakt mit Wasser PF₅, HF u.a. Zersetzungsprodukte bildet, die exotherm mit Batteriematerialien, beispielsweise den erfindungsgemäßen weitgehend übergangsmetallfreien Lithium-Sauerstoffverbindungen reagieren können. Bevorzugt wird statt dessen LiBOB, LiTFSI oder LiClO₄ als Leitsalz eingesetzt.

Der Lithiumlade- bzw. -entladeprozeß der negativen Elektrode (Anode) kann durch folgende Reaktionsgleichungen beschrieben werden:

2 LiOH + 2 Li ⇔ Li₂O₂ + 2 LiH (2)

Li₂O₂ + 2 Li ⇔ 2 Li₂O (3)

Die Gesamtreaktion ist dann wie folgt:

2 LiOH + 4 Li ⇔ 2 Li₂O + 2 LiH (4)

Links des Reaktionspfeiles von Reaktion (4) wird die lithiumarme, vollentladene Form (also LiOH) gezeigt, während rechts die vollgeladene Form (Mischung aus Lithiumoxid und Lithiumhydrid) aufgezeichnet ist.

Es gibt verschiedene Möglichkeiten, im Wesentlichen übergangsmetallfreie Lithium-Sauerstoffverbindungen (im folgenden als "sauerstoffhaltige Konversionselektroden" bezeichnet) als Anode für galvanische Elemente zu verwenden. So können sauerstoffhaltige Konversionselektroden im (teil)entladenen Zustand (also in Form von LiOH oder Li₂O₂, gegebenenfalls im Gemisch mit Lithiumhydrid) gegen ein lithiiertes Insertionsmaterial, beispielsweise ein Lithiummetalloxid Li*ₙ*M³O_{y}, geschaltet werden. Die Elektrodenreaktionen unter Berücksichtigung der vollständig entladenen und vollständig geladenen Form der sauerstoffhaltigen Konversionselektroden sehen dann bei der Verwendung einer Metalloxidkathode allgemein wie folgt aus:

n/2 LiOH + Li*ₙ*M³*_{y}*O*_{z}* ⇔ *n*/2 Li₂O + *n*/2 LiH + M³*_{y}*O*_{z}* (5)

Erfindungsgemäß ist es auch möglich, vom teilentladenen Zustand der sauerstoffhaltigen Konversionselektroden auszugehen (5a) oder nur teilweise (bis zur Stufe des Peroxids) zu laden (5b):

*n*/2 Li₂O₂ + Li*ₙ*M³*_{y}*O*_{z}* ⇔ *n*/2 Li₂O + M³*_{y}*O*_{z}* (5a)

*n* LiOH + Li*ₙ*M³*_{y}*O*_{z}* ⇔ *n*/*2* Li₂O₂ + *n* LiH + M³*_{y}*O*_{z}* (5b)

M³ ist mindestens ein redoxaktives Metall, ausgewählt aus der Gruppe Co, Ni, Mn, Fe, V, Cr, Mo, Ti, Zr oder eine Mischung daraus;
*n* eine ganze Zahl zwischen 1 und 3 und
*y* und *z* sind ganze Zahlen zwischen 1 und 4.

Besonders bevorzugt sind folgende Lithiummetalloxide: LiCoO₂, LiNiO₂, LiMn₂O₄, Li₂MnO₃, LiVO₂ sowie gemischte Metalloxide wie Li(Ni_{1/3}Mn_{1/3}Co_{1/3})O₂, Li(Ni_{0,85}Co_{0,15})O₂, Li(Ni_{0,85}Co_{0,1}Al_{0,05})O₂ oder LiFe_{0,5}Mn_{1,5}O₄.

Statt eines Metalloxides können auch andere Lithiuminsertionsmaterialien, beispielsweise Lithiumphosphate (z.B. LiFePO₄, LiVPO₄, LiMnPO₄), Lithiumsilikate (z.B. Li₂FeSiO₄, Li₂MnSiO₄, Li₂CoSiO₄) und gemischte lithiierte Fluorometalloxide Verwendung finden.

Wenn eine lithiumfreie oder lithiumdefiziente Kathode verwendet werden soll, so wird das sauerstoffhaltige Konversionselektrodenmaterial bevorzugt in der lithiumreichen (d.h. der geladenen Form, also als Li₂O, gegebenenfalls in Mischung mit LiH) verwendet. Es können dann Lithiuminsertionsmaterialien (z.B. Metalloxide wie MnO₂, NiO₂ oder V₂O₅) oder Konversionsmaterialien, bevorzugt Metallfluoride wie NiF₂, CoF₂, FeF₂ und FeF₃ oder Metalloxyfluoride wie BiOₓF₃-₂ₓ oder FeOF als positive Masse (Kathode) eingesetzt werden.

Es ist auch möglich, die sauerstoffhaltige Konversionselektrode der erfindungsgemäßen Lithiumbatterie in (teil)entladener Form gegen lithium*freie* Kathodenmaterialen zu verschalten. In diesem Fall ist es notwendig, eine weitere Lithiumquelle zu inkorporieren. Diese Lithiumquelle ist entweder reines Lithiummetall, beispielsweise in Pulverform oder eine Lithiummetall-haltige Legierung. Bevorzugt wird reines Lithiummetall verwendet. Dann bildet sich *in situ* (beim ersten Ladevorgang) formal eine Mischung aus Lithiumhydrid und Lithiumoxid und/oder Lithiumperoxid:

2 LiOH + 2*m* Li ⇔ *m* Li₂O_{2/*m*} + 2 LiH (6)

*m* = 1 oder 2

Im Falle der Verwendung des teilentladenen sauerstoffhaltigen Konversionselektrodenmaterials (Li₂O₂) bildet sich Lithiumoxid:

Li₂O₂ + 2 Li ⇔ 2 Li₂O (3)

Die Elektrodenredoxreaktionen sind beim Einsatz von Übergangsmetalloxiden als Kathodenmaterial beispielsweise wie folgt zu formulieren:

2 LiH + *m* Li₂O_{2/*m*} + M³_{y}O_{z} ⇔ 2 LiOH + Li_{2*m*}M³*_{y}*O*_{z}* (7)

2*o*Li₂O + M³_{y}O_{z} ⇔ *o*Li₂O₂ + Li_{2*o*}M³*_{y}*O*_{z}* (8)

mit *m*, *y, z*: Bedeutungen s.o. und *o* = 0,5, 1, 2 oder 3

Die theoretische gravimetrische Kapazität von LiOH beträgt gem. GI. (4) 2238 Ah/kg und damit etwa 6 mal so viel wie diejenige von Graphit. Bezogen auf die effektiv vorhandene Mischung aus Li₂O und LiH beträgt die theoretische Kapazität des erfindungsgemäßen sauerstoffhaltigen Konversionselektrodenmaterials 1417 Ah/kg.

Das Lithium in Gl. (6) kann auch im Überschuss eingesetzt werden. Dann bildet sich neben Lithiumhydrid ein Gemisch aus Lithiummetall und Lithiumoxid oder Lithiumperoxid:

2 LiOH + (2*m* + a) Li → *m* Li₂O_{2/*m*} + 2 LiH + *a* Li (9)

*a* ist eine Zahl zwischen 0 und 5, bevorzugt zwischen 0 und 2.

Bei der Verwendung von beispielsweise Übergangsmetalloxiden sieht die allgemeine Elektrodenredoxreaktion dann wie folgt aus:

2 LiH + *m* Li₂O_{2/*m*} + M³_{y}O_{z} + *a* Li ⇔ 2 LiOH + Li_{2*m*}M³*_{y}*O*_{z}* + *a* Li (10)

Bei der Verschaltung gegen eine lithiumbeladene Insertions- oder Konversionskathode ist es bevorzugt, die sauerstoffhaltige Konversionselektrode im entladenen Zustand, d.h. in Form von LiOH zu verwenden. Bei Verwendung von beispielsweise Lithiummanganspinell als Kathode besitzt die galvanische Zelle dann gem. der allgemeinen Gleichung (5) folgende Elektrodenkonfiguration:

2 LiMn₂O₄ // LiOH

LiOH + 2 LiMn₂O₄ ⇔ 2 LiH + Li₂O + 2 Mn₂O₄ (5a)

Erfindungsgemäß ist es auch möglich, die entladene übergangsmetallfreie sauerstoffhaltige Konversionselektrode gegen ein Gemisch aus Lithiummetall und der teilweise oder vollständig lithiumfreien Lithiuminsertionskathode zu verschalten. Die Konfiguration sieht dann beispielsweise wie folgt aus:

2 Li + 2 Mn₂O₄ // LiOH

Die Lithiierung des Kathodenmaterials kann entweder ex-situ (d.h. außerhalb der galvanischen Zelle) oder in der fertig montierten elektrochemischen Zelle beim Zyklisieren erfolgen.

Bei der Kombination einer lithiumfreien (oder -armen) Insertionskathode mit einer sauerstoffhaltigen Konversionselektrode der erfindungsgemäßen Lithiumbatterie ist es bevorzugt, diese im geladenen oder teilgeladenen Zustand zu verwenden. Beispielsweise kann die (teil)geladene Konversionselektrode gegen eine Kathode bestehend aus einer geeigneten Braunsteinmodifikation verbaut werden:

2 MnO₂ // LiH + Li₂O

LiH + Li₂O + 2 MnO₂ ⇔ LiOH + 2 LiMnO₂ (10 a)

2 LiH + Li₂O₂ + 2 MnO₂ ⇔ 2 LiOH + 2 LiMnO₂ (10 b)

Schließlich ist es möglich, ein Gemisch aus Lithiumhydroxid und Lithiummetall sowie einem lithiumfreien (oder -armen) Übergangsmetalloxid zu verwenden. Dann bildet sich in einem ersten Schritt gem. Gl (4) die geladene Anodenform (ein Li₂O/LiH-Gemisch). Als Beispiel wird eine Elektrodenredoxreaktion unter Verwendung von NiO₂ gezeigt:

2 NiO₂ // LiH + Li₂O

LiH + Li₂O + 2 NiO₂ ⇔ LiOH + 2 LiNiO₂ (7a)

In den obigen Reaktionsgleichungen und Elektrodenkonfigurationen sind die optimalen (also die theoretischen) stöchiometrischen Verhältnisse angegeben. Es kann sich jedoch anbieten, von diesen Verhältnissen abzuweichen, um beispielsweise die mechanische Elektrodenstabilität zu erhöhen.

Beispielsweise beträgt das theoretische Molverhältnis bei der geladenen erfindungsgemäßen sauerstoffhaltigen Konversionselektrode 2 LiH : 2 Li₂O. Wird weniger LiH bezogen auf Li₂O verwendet, beispielsweise nur ein Molverhältnis von 1 : 2, so kann nicht alles Lithiumoxid in die entladene Form, das Lithiumhydroxid (LiOH), überführt werden. Vielmehr bleibt ein Teil des Lithiumoxids auch nach der Ladung in unveränderter Form übrig. Die Elektrodenkonfiguration und die Lade- Entladegleichungen sehen dann beispielsweise beim Einsatz von Braunstein als Kathode wie folgt aus:

2 MnO₂ // LiH + 2 Li₂O

LiH + 2 Li₂O + 2 MnO₂ ⇔ LiOH + Li₂O + 2 LiMnO₂ (7a)

Das nicht am Redoxprozeß teilnehmende Lithiumoxid bewirkt eine geringere Volumenänderung der Anode beim Zyklisieren, d.h. es stabilisiert sie, so dass eine weiter verbesserte Zyklenstabilität erreicht wird.

Wird das erfindungsgemäße sauerstoffhaltige Konversionselektrodenmaterial im geladenen Zustand verwendet, so kann das Molverhältnis zwischen LiH und Li₂O Werte zwischen 0,1:1 bis 10:1 einnehmen. In ähnlicher Weise kann das Molverhältnis zwischen LiOH und Li-metall Werte zwischen 1:1 bis 1:20 einnehmen.

Das sauerstoffhaltige Konversionselektrodenmaterial kann in völlig entladener Form (also als LiOH) eingesetzt werden oder auch im Gemisch mit Lithiumoxid und /oder Lithiumperoxid und/oder LiH. Im Allgemeinen liegen erfindungsgemäße Molverhältnisse zwischen LiOH, Li₂O, Li₂O₂ und LiH im Bereich zwischen 1 : 0 : 0 : 0 und 1 : 0,1 -2 : 0,1-2 : 0,1 -12.

Das sauerstoffhaltige Konversionselektrodenmaterial der erfindungsgemäßen Lithiumbatterie liegt bevorzugt in Pulverform vor. Im Allgemeinen sind die Partikel < 100 µm, besonders bevorzugt < 30 µm groß. Bevorzugt werden dem sauerstoffhaltigen Konversionselektrodenmaterial leitfähigkeitsverbessernde Additive, beispielsweise Graphit, Leitruß oder fein verteilte Metalle (z.B. Ti-Pulver) beigemischt. Besonders bevorzugt wird das leitfähigkeitsverbessernde Additiv mit dem sauerstoffhaltigen Konversionselektrodenmaterial vermahlen, beispielsweise in einer Kugel- oder Stabmühle.

Die Herstellung des entladenen sauerstoffhaltigen Konversionselektrodenmaterials erfolgt nach Stand der Technik beispielsweise durch Kaustifizierung von Lithiumcarbonat mit gebranntem oder gelöschtem Kalk:

Li₂CO₃ + Ca(OH)₂ → 2 LiOH + CaCO₃ ↓ (11)

Lithiumperoxid wird durch Umsetzung von Lithiumhydroxid mit Wasserstoffperoxid gem.

2 LiOH + H₂O₂ → Li₂O₂ + 2 H₂O (12)

gewonnen. Lithiumoxid kann durch thermische Zersetzung von Lithiumperoxid bei Temperaturen über ca. 190 °C

2 Li₂O₂ → 2 Li₂O + O₂ (13)

oder durch Umsetzung von Lithiumhydrid mit Lithiumhydroxid bei Temperaturen oberhalb 200°C, besonders bevorzugt > 250°C hergestellt werden:

LiH + LiOH → Li₂O + H₂ (14)

Weiterhin lässt sich Lithiumoxid durch Umsetzung von Lithiumperoxid mit Lithiummetall gemäß

2 Li + Li₂O₂ → 2 Li₂O (15)

bei Temperaturen oberhalb des Lithiumschmelzpunktes, bevorzugt oberhalb 300°C in der Feststoffmischung in einem geschlossenen, druckfesten Gefäß herstellen.

Schließlich kann eine Mischung aus Lithiumhydrid und Lithiumoxid durch getrennte Herstellung der beiden Lithiumverbindungen und anschließende Vermischung hergestellt werden. Sie kann auch durch Reaktion zwischen Lithiumhydroxid und Lithiummetall gemäß

2 Li + LiOH → LiH + Li₂O (16)

entweder in Substanz, d.h. lösemittelfrei oder als Dispersion in einem hochsiedenden Lösungsmittel, vorzugsweise Paraffinöl, bei Temperaturen von 180 bis 300°C synthetisiert werden. Bevorzugt kann diese Umsetzung unter Mahlbedingungen, d.h. unter Verwendung einer Mühle durchgeführt werden.

Schließlich können Mischungen aus Lithiumhydroxid und Lithiumoxid durch Umsetzung einer Pulvermischung bestehend aus equimolaren Mengen an Lithiumhydrid und Lithiumperoxid bei Temperaturen über 200°C, bevorzugt über 250°C hergestellt werden:

LiH + Li₂O₂ → LiOH + Li₂O (17)

genelektrode mit einem negativeren Potential (beispielsweise Lithiummetall oder eine Lithium-Metalllegierung).

Im Einzelnen betrifft die Erfindung:
- Eine negative Masse für ein galvanisches Element, die Lithiumhydroxid und/oder Lithiumperoxid und/oder Lithiumoxid sowie im geladenen Zustand zusätzlich Lithiumhydrid enthält oder daraus besteht.
- Eine negative Masse, die ein sauerstoffhaltiges Konversionselektrodenmaterial in völlig entladener Form oder ein Gemisch mit Lithiumoxid und /oder Lithiumperoxid und/oder LiH enthält, wobei die Molverhältnisse zwischen LiOH, Li₂O, Li₂O₂ und LiH im Bereich zwischen 1 : 0 : 0 : 0 und 1 : 0,1 -2 : 0,1-2 : 0,1 -12 liegen.
- Eine negative Masse, in der das sauerstoffhaltige Konversionselektrodenmaterial in Pulverform vorliegt, wobei die Partikel < 100 µm, besonders bevorzugt < 30 µm groß sind.
- Eine negative Masse für ein galvanisches Element, die leitfähigkeitsverbessernde Additive, beispielsweise Graphit oder Leitruß enthält.
- Ein Verfahren zur Herstellung einer negativen Masse, bei dem Lithiumhydrid und Lithiumhydroxid umgesetzt werden.
- Ein Verfahren zur Herstellung einer negativen Masse, bei dem Lithiummetall mit Lithiumperoxid bei Temperaturen oberhalb des Lithiumschmelzpunktes, bevorzugt oberhalb von 300°C in einem geschlossenen, druckfesten Gefäß umgesetzt werden.
- Verfahren zur Herstellung einer negativen Masse, bei dem Lithiummetall und Lithiumhydroxid umgesetzt werden.
- Verfahren zur Herstellung einer negativen Masse, bei dem Lithiumhydrid und Lithiumperoxid umgesetzt werden.
- Eine Lithiumbatterie, bei der eine sauerstoffhaltige Konversionselektrode enthaltend Lithiumhydroxid und/oder Lithiumperoxid und/oder Lithiumoxid sowie im geladenen Zustand zusätzlich Lithiumhydrid mit einer Kathode enthaltend ein Lithiuminsertionsmaterial oder ein Konversionsmaterial durch einen Separator/Elektrolytverbund in Kontakt gebracht ist.
- Eine Lithiumbatterie, deren Anode eine sauerstoffhaltige Konversionselektrode ist, die im entladenen Zustand Lithiumhydroxid und/oder Lithiumperoxid enthält oder daraus besteht.
- Eine Lithiumbatterie, deren Anode eine sauerstoffhaltige Konversionselektrode ist, die im geladenen Zustand Lithiumhydrid enthält.
- Eine Lithiumbatterie, dessen Lithiuminsertionsmaterial ausgewählt ist aus der Gruppe bestehend aus Lithiummetalloxid, einem lithiierten Metallphosphat, einem lithiierten Silikat oder einem gemischt lithiierten Fluorometalloxid und dessen Konversionsmaterial ausgewählt ist aus der Gruppe bestend aus Übergangsmetallfluoriden oder Übergangsmetalloxyfluoriden.
- Verfahren zur Herstellung einer Lithiumbatterie, bei dem eine Anode in Form einer sauerstoffhaltige Konversionselektrode enthaltend Lithiumhydroxid und/oder Lithiumperoxid und/oder Lithiumoxid sowie im geladenen Zustand zusätzlich Lithiumhydrid mit einer Kathode enthaltend ein Lithiuminsertionsmaterial oder ein Konversionsmaterial durch einen Separator / Elektrolytverbund in Kontakt gebracht wird.
- Verfahren zur Herstellung einer Lithiumbatterie, bei dem als Kathode ein Lithiuminsertionsmaterial ausgewählt aus der Gruppe bestehend aus Lithiummetalloxid, Lithiummetallphosphat, Lithiumsilikat oder einen lithiierten Fluorometalloxid oder ein Konversionselektrodenmaterial ausgewählt aus der Gruppe bestehend aus einem Übergangsmetallfluorid oder einen Übergangsmetalloxyfluorid eingesetzt wird.
- Verfahren zur Herstellung einer Lithiumbatterie, bei dem eine Anode enthaltend ein Gemisch aus Lithiumhydrid sowie Lithiumoxid und/oder Lithiumperoxid mit einer teilweise oder vollständig delithiierten oder lithiumfreien Kathode enthaltend ein Lithiuminsertionsmaterial oder ein Konversionsmaterial durch einen Separator/Elektrolytverbund in Kontakt gebracht wird.
- Verfahren zur Herstellung einer Lithiumbatterie, bei dem das sauerstoffhaltige Konversionselektrodenmaterial in völlig entladener Form eingesetzt wird oder im Gemisch mit Lithiumoxid und /oder Lithiumperoxid und/oder LiH, wobei die Molverhältnisse zwischen LiOH, Li₂O, Li₂O₂ und LiH im Bereich zwischen 1 : 0 : 0 : 0 und 1 : 0,1 -2 : 0,1-2 : 0,1 -12 liegen.
- Verfahren zur Herstellung einer Lithiumbatterie, bei dem das sauerstoffhaltige Konversionselektrodenmaterial in Pulverform vorliegt, wobei die Partikel < 100 µm, besonders bevorzugt < 30 µm groß sind.

Die Erfindung wird nachfolgend an Hand von fünf Beispielen und vier Abbildungen näher erläutert.

Es zeigen:
- Figur 1 -: DSC-Diagramm für die Herstellung gemäß Beispiel 2
- Figur 2 -: DSC-Diagramm für die Herstellung gemäß Beispiel 3
- Figur 3 -: DSC-Diagramm für die Herstellung gemäß Beispiel 4
- Figur 4 -: DSC-Diagramm der thermischen Elektrolytstabilität gemäß Beispiel 5

### Beispiel 1

### Herstellung von Lithiumoxid durch Umsetzung von Lithiumhydrid mit Lithiumhydroxid

In einer Argon(Ar)-gefüllten Handschuhbox wird eine Mischung bestehend aus jeweils 50 mmol Lithiumhydrid (0,40 g) und wasserfreiem Lithiumhydroxid (1,20 g) in einem Achatmörser vermischt und pulverisiert und dann in einen ca. 5 ml fassenden Stahlautoklaven mit Druckanzeige gefüllt und mit einer Aufheizgeschwindigkeit von 45 K/h auf 360°C erwärmt. Beim Überschreiten von etwa 200°C beobachtet man den Beginn einer Gasbildung. Zum Ende des Experimentes hat sich ein Druck von 25 bar aufgebaut.

Der Autoklav wird auf Raumtemperatur abgekühlt und das erhaltene weiße Pulver per Röntgendiffraktometrie untersucht. Es besteht im Wesentlichen aus Lithiumoxid neben Spuren an übriggebliebenen Edukten.

### Beispiel 2

### Herstellung von Lithiumoxid durch Umsetzung von Lithiummetall mit Lithiumperoxid

In einer Ar-gefüllten Handschuhbox wird eine Mischung bestehend aus 60 mmol Lithiummetallpulver (0,42 g) und 30 mmol Lithiumperoxid (1,38 g) in einem Achatmörser vermischt und pulverisiert und dann in einen ca. 5 ml fassenden Stahlautoklaven mit Druck- und Temperaturanzeige gefüllt und mit einer Aufheizgeschwindigkeit von 45 K/h auf 360°C erwärmt.

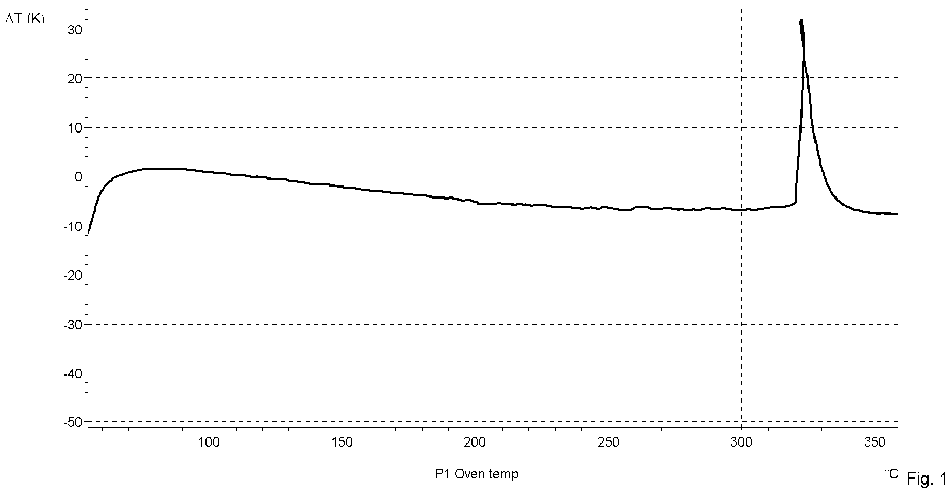

Beim Überschreiten von etwa 310°C erkennt man das Exotherm der gewünschten Umsetzung in Figur 1.

Das Reaktionsprodukt wurde nach Abkühlung auf Raumtemperatur mittels XRD untersucht. Es besteht aus phasenreinem Li₂O.

### Beispiel 3

### Herstellung einer Mischung aus Lithiumhydrid und Lithiumoxid durch Umsetzung von Lithiummetall mit Lithiumhydroxid

In einer Ar-gefüllten Handschuhbox wird eine Mischung bestehend aus 80 mmol Lithiummetallpulver (0,56 g) und 40 mmol wasserfreiem Lithiumhydroxid (0,96 g) in einem Achatmörser vermischt und pulverisiert und dann in einen ca. 5 ml fassenden Stahlautoklaven mit Druck- und Temperaturanzeige gefüllt und mit einer Aufheizgeschwindigkeit von 45 K/h auf 360°C erwärmt.

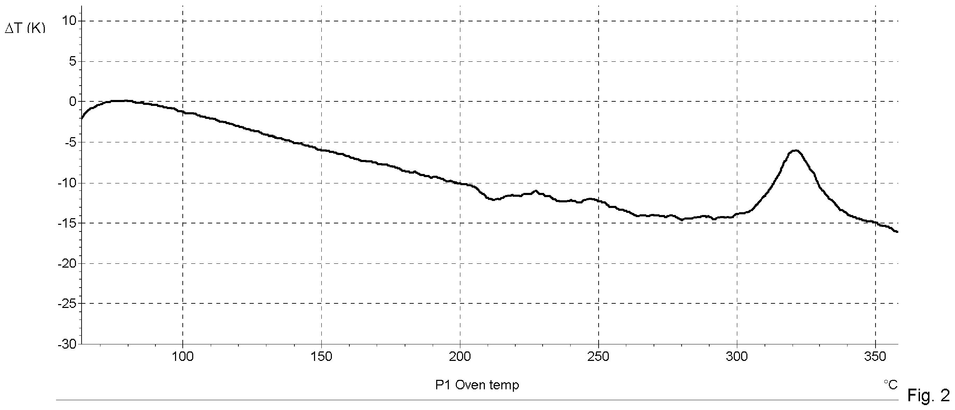

Beim Überschreiten von etwa 300°C erkennt man das Exotherm der gewünschten Umsetzung in Figur 2.

Das Reaktionsprodukt wurde nach Abkühlung auf Raumtemperatur mittels XRD untersucht. Es besteht aus Li₂O und LiH neben geringen Resten an LiOH.

### Beispiel 4

Herstellung einer Mischung aus Lithiumhydroxid und Lithiumoxid durch Umsetzung von Lithiumhydrid mit Lithiumperoxid.

In einer Ar-gefüllten Handschuhbox wird eine Mischung bestehend aus je 45 mmol Lithiumhydrid (0,36 g) und 45 mmol Lithiumperoxid (2,06 g) in einem Achatmörser vermischt und pulverisiert und dann in einen ca. 5 ml fassenden Stahlautoklaven mit Druck- und Temperaturanzeige gefüllt und mit einer Aufheizgeschwindigkeit von 45 K/h auf 360°C erwärmt.

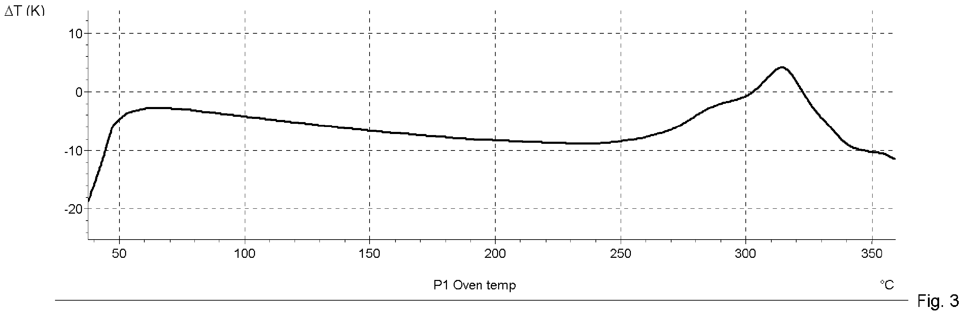

Beim Überschreiten von etwa 200°C erkennt man ein breites Exotherm mit Spitzen bei 290 und 310°C in Figur 3.

Per XRD lassen sich im abgekühlten Produkt die erwarteten Reflexe von Lithiumoxid und Lithiumhydroxid identifizieren, dagegen nicht mehr die Reflexe von LiH und Li₂O₂.

### Beispiel 5

### Thermische Beständigkeit von Mischungen aus Batterieelektrolyten mit Lithiumperoxid

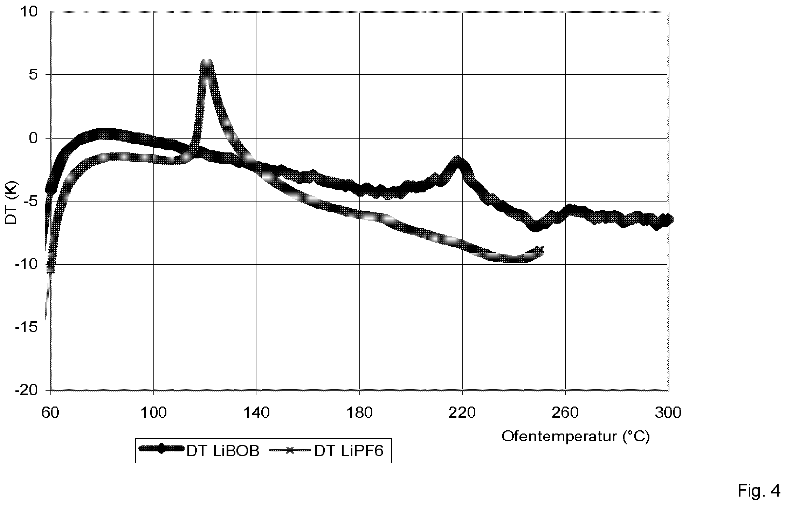

In einen ca. 5 ml fassenden Stahlautoklaven mit Druck- und Temperaturanzeige wurde ein Gemisch bestehend aus je 0,10 g Lithiumperoxid (Lieferant Aldrich, Gehalt min. 90 %) und 2 ml Batterieflüssigelektrolyten gefüllt und mit einer Aufheizgeschwindigkeit von 45 K/h auf 250 oder 300°C erwärmt. Als Batterieelektrolyte kamen eine 10 %ige Lösung von LiPF₆ sowie eine 11 %ige Lösung von Lithium bis(oxalato)borat (LiBOB) in einem Gemisch aus Ethylencarbonat (EC) und Ethylmethylcarbonat (EMC) 1 : 1 (wt : wt) zum Einsatz in Figur 4.

Man erkennt, dass der LiPF₆-Elektrolyt in Gegenwart von Lithiumperoxid bis etwa 110°C stabil ist, sich aber dann unter starker Energiefreisetzung zersetzt. Dagegen ist der LiBOB-Elektrolyt bis etwa 190°C stabil.

## Patentansprüche

1. Lithiumbatterie, enthaltend
eine negative Masse als Anode in Form einer übergangsmetallfreien, sauerstoffhaltigen Konversionselektrode,
eine übergangsmetallhaltige Kathode und
einen aprotischen Lithiumelektrolyten,
wobei die übergangsmetallfreie, sauerstoffhaltige Konversionselektrode in vollentladenem Zustand aus Lithiumhydroxid und gegebenenfalls leitfähigkeitsverbessernden Additiven besteht.

2. Lithiumbatterie nach Anspruch 1, **dadurch gekennzeichnet, dass** die positive Masse (Kathode) ein Lithiuminsertionsmaterial oder ein Konversionsmaterial ist.

3. Lithiumbatterie nach Anspruch 1 oder 2, **dadurch gekennzeichnet, dass** das Lithiuminsertionsmaterial ausgewählt ist aus der Gruppe bestehend aus Lithiummetalloxid, einem lithiierten Metallphosphat, einem lithiierten Silikat oder einem gemischt lithiierten Fluorometalloxid und dass das Konversionsmaterial ausgewählt ist aus der Gruppe bestehend aus Übergangsmetallfluoriden oder Übergangsmetalloxyfluoriden.

4. Lithiumbatterie nach einem der Ansprüche 1 bis 3, **dadurch gekennzeichnet, dass** das sauerstoffhaltige Konversionselektrodenmaterial in Pulverform vorliegt, wobei die Partikel < 100 µm, besonders bevorzugt < 30 µm groß sind.

5. Lithiumbatterie nach einem der Ansprüche 1 bis 4, **dadurch gekennzeichnet, dass** das/die leitfähigkeitsverbessernden Additiven mit dem sauerstoffhaltigen Konversionselektrodenmaterial vermahlen ist/sind.

## Claims

1. Lithium battery, containing
a negative mass as anode in the form of a transition metal-free, oxygen-containing conversion electrode,
a transition metal-containing cathode and
an aprotic lithium electrolyte,
wherein the transition metal-free, oxygen-containing conversion electrode in the fully discharged state consists of lithium hydroxide, and optionally conductivity-enhancing additives.

2. Lithium battery according to claim 1, **characterized in that** the positive mass (cathode) is a lithium insertion material or a conversion material.

3. Lithium battery according to claim 1 or 2, **characterized in that** the lithium insertion material is selected from the group consisting of lithium metal oxide, a lithiated metal phosphate, a lithiated silicate or a mixed lithiated fluorometal oxide and that the conversion material is selected from the group consisting of transition metal fluorides or transition metal oxyfluorides.

4. Lithium battery according to any one of claims 1 to 3, **characterized in that** the oxygen-containing conversion electrode material is in powder form, wherein the particles have a size of < 100 µm, particularly preferably < 30 µm.

5. Lithium battery according to any one of claims 1 to 4, **characterized in that** the conductivity enhancing additive(s) is/are milled with the oxygen-containing conversion electrode material.

## Revendications

1. Batterie au lithium, comprenant :
- en tant qu'anode, une masse négative se présentant sous la forme d'une électrode de conversion qui contient de l'oxygène et ne contient pas de métal de transition,
- une cathode contenant un métal de transition,
- et un électrolyte lithié aprotique,
dans laquelle l'électrode de conversion qui contient de l'oxygène et ne contient pas de métal de transition est constituée, à l'état complètement déchargé, d'hydroxyde de lithium et, en option, d'adjuvants améliorant la conductivité.

2. Batterie au lithium conforme à la revendication 1, **caractérisée** en en ce que la masse positive (cathode) est un matériau d'insertion de lithium ou un matériau de conversion.

3. Batterie au lithium conforme à la revendication 1 ou 2, **caractérisée en ce que** le matériau d'insertion de lithium est choisi dans l'ensemble constitué par un oxyde de lithium et de métal, un phosphate de métal lithié, un silicate lithié et un oxyde de fluoro-métal lithié mixte, et **en ce que** le matériau de conversion est choisi dans l'ensemble constitué par les fluorures de métal de transition et les oxyfluorures de métal de transition.

4. Batterie au lithium conforme à l'une des revendications 1 à 3, **caractérisée en ce que** le matériau d'électrode de conversion contenant de l'oxygène se présente sous la forme d'une poudre dont les particules ont une taille inférieure à 100 µm, et de préférence, inférieure à 30 µm.

5. Batterie au lithium conforme à l'une des revendications 1 à 4, **caractérisée en ce que** le ou les adjuvant(s) améliorant la conductivité est ou sont moulu(s) avec le matériau d'électrode de conversion contenant de l'oxygène.
